# EUROPEAN PATENT SPECIFICATION

(11) **EP 1 435 770 B1**
(45) Date of publication and mention of the grant of the patent: **15.08.2007**
(21) Application number: 02776905.8
(22) Date of filing: 23.09.2002
(51) Int. Cl.: A01J 5/08

(54) **TEAT CUP INCORPORATING A VALVE**
ZITZENBECHER MIT EINEM VENTIL
GOBELET TRAYEUR COMPRENANT UNE SOUPAPE

(30) Priority: 21.09.2001 DK 200101367
(43) Date of publication of application: 14.07.2004
(73) Proprietor: AKTIESELSKABET S.A. CHRISTENSEN & CO., DK-6000 Kolding (DK)
(72) Inventor: LINDHOLST, Torben, K., DK-6000 Kolding (DK)
(74) Representative: Brock-Nannestad, George
(86) International application number: PCT/DK2002/000617
(87) International publication number: WO 2003/024203

(56) References cited:
- EP-A1- 0 088 580
- EP-A1- 0 566 977
- DE-A1- 19 740 537
- US-A- 4 648 350

## Description

The invention concerns a teat cup with a valve housing below a teat cup liner for milking machines comprising a connection to a source of pulsating vacuum and a connection to vacuum for the transport of milk.

Teat cups consist of an outer tubular part and an inner part made of rubber, termed a teat cup liner, which is connected to the outer part in a sealing relationship such that pressure variations from a source of pulsating vacuum cause cyclic compresion of the liner around each teat. Hereby milk is sucked out of the milk gland and into the valve housing below the liner, from which it is transported through a hose by means of vacuum at the other end, with an admixture of a certain but small amount of air which is let in by a calibrated opening.

Normally, the vacuum supply is central and made to serve a number of milking stations, and the transport capacity for the milk transport will be considerably reduced if there are open connections to the atmosphere, e.g. in case a teat cup is not fitted correctly. In known plants the milk transport hoses are taken to a central unit which also comprises actuating devices for the vacuum, but it requires operation using both hands at a time where both hands could advantageously be employed for fitting teat cups. A part of these problems have been solved by providing a kink on the hose which closes the vacuum when the teat cup is hanging downwards. During fitting of the teat cup the hose is straightened out and obtains its full lumen, whereby the vacuum becomes active for transporting milk.

Furthermore it is a characteristic of a number of hoofed animals that they move around more than cows and frequently will kick off a fitted teat cup. This not only causes a reduction of the suction, but large quantities of air and dust are sucked in from the place where the teat cup ends up, which constitutes a hygienic risk. Hence there is a need for a construction, where vacuum is only provided to the teat cup when it is correctly fitted or during the regular and necessary wash.

Such a construction is known from EP 0 903 078 Al, in which the outer tube of the teat cup is fitted into a cage which may be moved axially with respect to the outer tube and thereby activate an axially fitted valve which opens the vacuum connection. This valve will close by itself if the suction from the vacuum hose does not keep it open, and it will hence close automatically in case a teat cup is kicked off. Even if the construction in practice functions precisely as described in the mentioned publication, it is still perceived as a complication that one has to be sure that the required axial displacement of the cage with respect to the outer tube is taking place before the vacuum connection becomes active.

It is the purpose of the invention to provide a teat cup which has a practical function in all respects and which does not display the disadvantages of prior art.

This is obtained in a construction which is particular in that it comprises a pivoted valve lever fitted in the valve housing and provided with a valve plug which may close the vacuum connection to a sufficient degree, as well as a diaphragm which may move according to the pressure differential between the valve housing and the surrounding atmosphere, said valve lever being caused by the diaphragm to open during milking or wash and to close when the diaphragm is inactive, or being closed manually by means of a push-button.

The lever construction is particularly advantageous because the force of the diaphragm acts comparatively close to the pivot, whereby a small movement here will provide a large movement at the seat of the valve.

In an advantageous embodiment the diaphragm may furthermore be influenced by a finger for forced opening of the valve lever.

In a further advantageous embodiment pressing the push-button simultaneously opens for ingress of atmospheric air into the valve housing.

In a further advantageous embodiment of the invention there is provided in the housing a calibrated opening for well-defined entry of atmospheric air. Hereby the necessary admixture of atmospheric air is provided for the transport of milk through the vacuum line.

According to a further advantageous embodiment of the invention a better control of the equalisation of the pressure in the valve housing during removal of the teat cup is obtained, in that the valve plug fits closely to the valve seat when the valve lever is activated, and in that there is provided an air passage in conjunction with the valve plug, which may be closed by a further valve plug that is disposed on a further pivoted and spring-loaded arm.

The invention further relates to a use for milking cows of the teat cup construction of the kind described, in that four teat cups are fitted into a common carrying arm in the milking position with the opening of the teat cup liner facing upwards during transportation to the milk glands. Hereby full use is made of the construction which does not comprise kinking the hoses, because the internal valves ensure that the vacuum condition is preserved.

The invention will be described in greater detail in the following with reference to the drawing, in which
Fig I shows a section through a teat cup according to the invention with the valve closed against the vacuum,
Fig. 2 shows a corresponding section when operational and with vacuum for transportation,
Fig. 3 shows a corresponding section with a forced closure of the valve, and
Fig. 4 shows a detail concerning the valve plug.

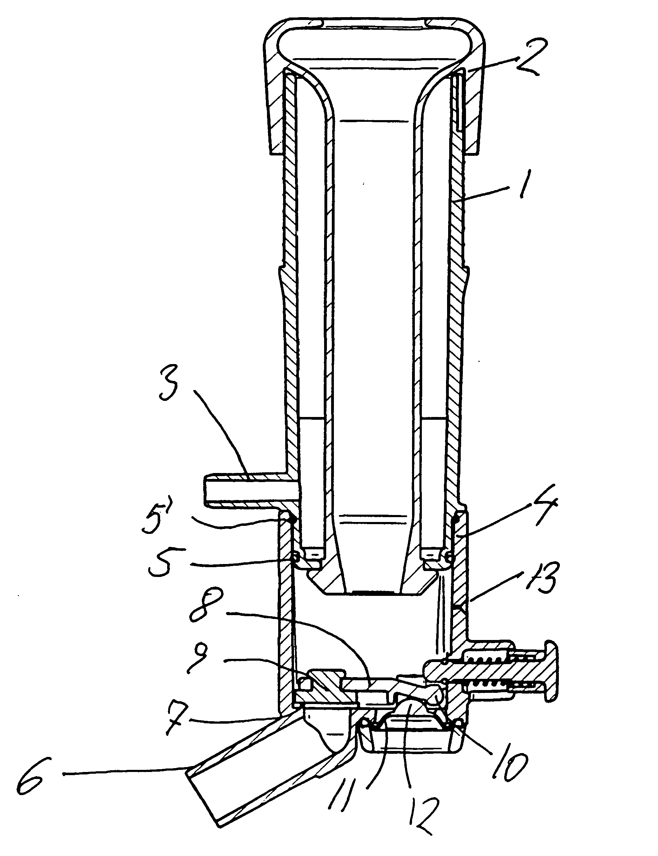

In Fig. 1 a teat cup is seen comprising a teat cup shell 1, which is provided with a teat cup liner (US: "an inflation") 2 and a connection nipple 3 for a hose connection to a pulsating vacuum source. The teat cup shell 1 is mounted in the valve housing 4, and a seal against the surrounding atmospheric air has been assured by means of the O-ring 5. The teat cup liner 2 fits closely to the teat cup shell and becomes equally tight against atmospheric air when the liner is mounted on the teat. At the bottom and projecting at an angle there is a connection nipple 6 which is connected to the vacuum line (milk line). The nipple 6 ends at the valve housing 4 in a valve seat 7. A valve lever 8 carrying a valve plug 9 is pivotably hinged in the joint 10 and maintains the valve closed when the teat cup is not fitted. In this condition the pressure is the same on both sides of a diaphragm 11 fitted in the valve housing and provided with an inwards projecting part 12. The valve is not completely closed, in that there is a passage for the air required for transporting the milk in the milk line and for the automatic opening function when fitting to teats or in connection with wash. The valve housing 4 is provided with an air inlet 13 for use when transporting milk during milking.

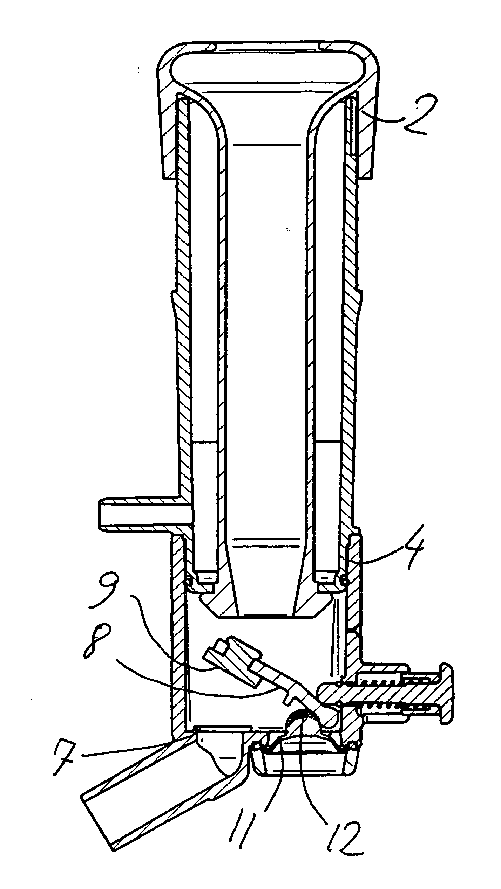

When the teat cup liner 2 is fitted to a teat, suction through the milk line 6 and the incompletely closed valve creates vacuum in the valve housing 4 and the diaphragm 11 is hence pushed into the valve housing, whereby its part 12 influences the valve lever 8 to open the valve. Hereby vacuum is obtained to full extent for sucking the milk out of the teat, and the opening of the valve is now so great that the milk may pass without restriction. This condition is shown in Fig. 2. It will be noted that as long as the vacuum in the valve housing 4 is sufficiently strong, the diaphragm 11 will ensure that the valve 7, 9 is open. If the teat cup should be pulled off, the pressure in the valve housing rises steeply, and the diaphragm 11 returns to its position of rest, whereby the plug 9 is pulled by the stream of air to closure of the valve, subsequent to which there will only be the small stream that will re-establish the vacuum when the large leak - the teat cup liner 2 - has been closed once again.

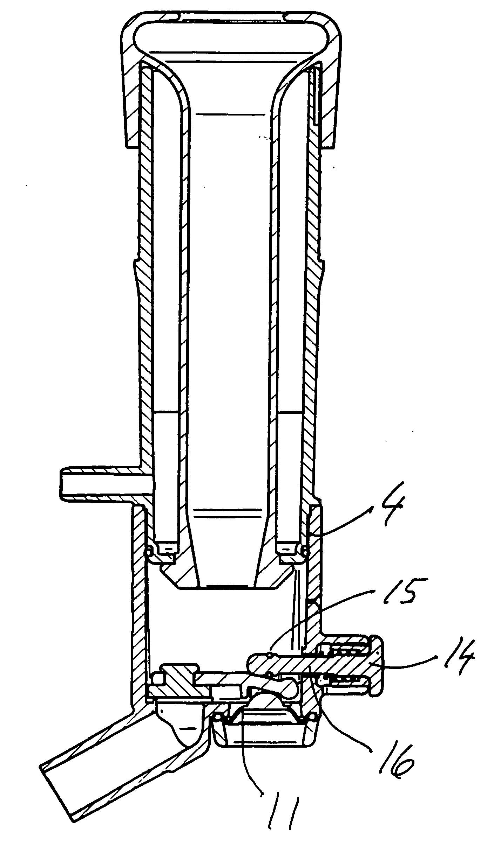

In Fig. 3 it is shown, how the suction in the valve housing 4 may be eliminated when it is desired to end the milking. A push-button 14 is spring-loaded so that an O-ring 15 ensures a seal between the shank 16 of the button and the valve housing 4 in order that the functions described above may take place uninterrupted. However, the vacuum may be eliminated when the push-button 14 is pushed, whereby the shank influences the valve lever 8 to close the valve, and the shank 16 has a diameter which is so much smaller than the opening through which it passes that air may enter along it. Pushing the push-button hence entails that the large volume flow which creates the vacuum is stopped at the valve, and that the remaining vacuum is vented. Thereby the teat cup liner can no longer hold the teat, and the teat cup may be removed.

In case it is desired to use vacuum in assisting the fitting of a teat cup, the diaphragm 11 may be activated manually from the outside, in order that the valve 7, 9 is opened manually during fitting.

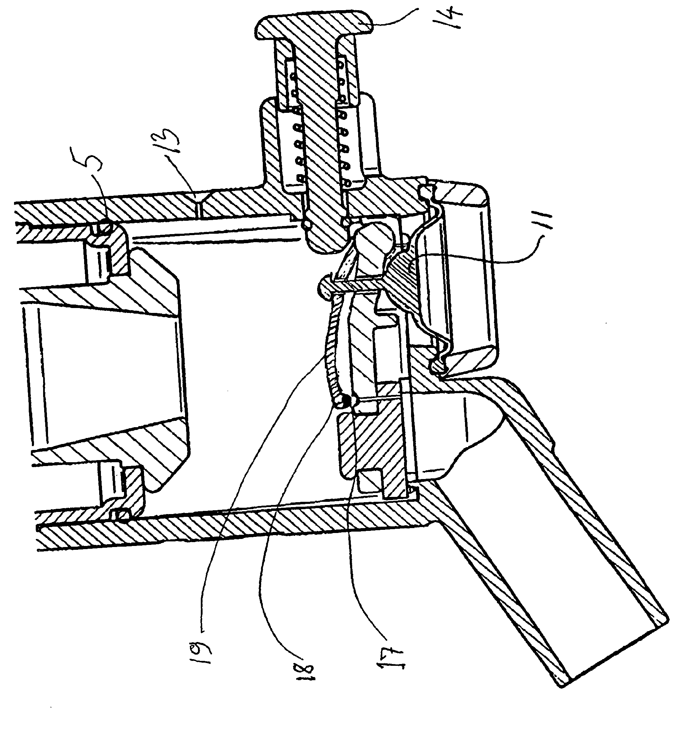

In Fig. 4 the lower part of the valve housing 4 is seen in enlargement, and an embodiment of the invention is shown, in which activation of the push-button 14 causes a faster equalisation to atmospheric pressure in the valve housing is obtained than in the embodiment described above. In this case the valve plug 9 fits tightly to the valve seat 7, but instead there is provided an opening 17 through the valve plug. This opening may be closed by a further plug 18 which is fitted to the end of a pivoted lever 19. When the plug 18 is pressed against the opening 17 there is no connection at all to vacuum, and the openings which have been established through the hole 13 and along the shank 16 ensure a fast equalisation of the pressure. As the lever 19 is resilient, its position of rest will ensure that the opening 17 is open when it is not positively closed.

The invention entails that the large variations of pressure in the vacuum line that would appear if a teat cup were suddenly removed, are not occurring. Simultaneously there is still so much transport of air through the teat cup that the last milk in the milk line after a possible kick-off may be transported without sudden acceleration, and a working vacuum may be quickly established, when a teat cup has once more been fitted.

## Claims

1. A a teat cup with a valve housing (4) below a teat cup liner (2) for milking machines comprising a connection (3) to a source of pulsating vacuum and a connection (6) to vacuum for the transport of milk **characterised in that** it comprises a pivoted valve lever (8) fitted in the valve housing (4) and provided with a valve plug (9) which may close the vacuum connection to a sufficient degree, as well as a diaphragm (11) which is movable according to the pressure differential between the valve housing (4) and the surrounding atmosphere, said valve lever (8) being caused by the diaphragm (11) to open during milking or wash and to close when the diaphragm (11) is inactive, or being closed manually by means of a push-button (14).

2. A teat cup according to claim 1, **characterised in that** the diaphragm (11) is fitted in the valve housing (4) in such a way that it may furthermore be influenced by a finger for forced opening of the valve lever (8).

3. A teat cup according to claim 1, **characterised in that** means (15, 16) have been provided, in order that pressing the push-button (14) simultaneously opens for ingress of atmospheric air into the valve housing (4).

4. A teat cup according to claim 1, **characterised in that** there is provided in the housing (4) a calibrated opening (13) for well-defined ingress of atmospheric air.

5. A teat cup according to claim 1, **characterised in that** the valve plug (9) fits closely to the valve seat (7) when the valve lever (8) is activated, and **in that** there is provided an air passage (17) in conjunction with the valve plug (9), which may be closed by a further valve plug (18) that is disposed on a further pivoted and sprung arm (19).

6. A teat cup according to any one of the preceding claims,
**characterised in that** the valve housing (4) is connected to the teat cup shell (1) by means of two O-rings (5, 5').

7. Use of a teat cup according to claim 1 for milking of cows,
**characterised in that** four teat cups (1,2, 3, 5, 6) are fitted into a common carrying arm in the milking position with the teat cup liner facing upwards during transportation to the milk glands.

## Patentansprüche

1. Zitzenbecher mit einem Ventilgehäuse (4) unterhalb eines Zitzengummis (2) für Melkmaschinen, umfassend eine Verbindung (3) zu einer Quelle pulsierendem Vakuums für die Förderung von Milch,
**dadurch gekennzeichnet, dass** er einen schwenkbaren Ventilarm (8) umfasst, dass in dem Ventilgehäuse (4) angebracht ist und mit einem Ventilstopfen versehen ist, dass die Vakuumverbindung ausreichend verschliessen kann, sowohl als eine Membran (11), die beweglich ist gemäss der Druckunterschied zwischen dem Ventilgehäuse und die umgebende Atmosphäre, dass der genannte Ventilarm (8) mittels der Membran (11) zu öffnen während des Melkens oder Waschens gebracht wird, und zu schliessen bei inaktiver Membran (11) oder durch manuelles Verschliessen mittels eines Knopfes (14).

2. Zitzenbecher nach Anspruch 1, **dadurch gekennzeichnet, dass** die Membran (11) auf solcher Weise in dem Ventilgehäuse (4) angebracht ist, damit sie weiter von einem Finger zur gezwungenen Öffnung des Ventilhebels beeinflussbar ist.

3. Zitzenbecher nach Anspruch 1, **dadurch gekennzeichnet, dass** Mittel (15, 16) vorgesehen sind, damit, dass Druck auf dem Knopf (14) gleichzeitig atmosphärische Luft in dem Ventilgehäuse einlässt.

4. Zitzenbecher nach Anspruch 1, **dadurch gekennzeichnet, dass** im Gehäuse (4) eine geeichte Öffnung (13) angebracht ist, um gut definiertes Eindrängen von atmosphärischem Luft zu erlauben.

5. Zitzenbecher nach Anspruch 1, **dadurch gekennzeichnet, dass** der Ventilstopfen (9) dicht an dem Ventilsitz (7) passt, wenn der Ventilhebel (8) aktiviert ist, und **dadurch** dass sich eine Luftpassage (17) in Verbindung mit dem Ventilstopfen (9) befindet, die durch einen weiteren Ventilstopfen (18), den sich auf einen weiteren schwenkbaren und gefederten Arm (19) befindet, gesperrt werden kann.

6. Zitzenbecher nach jedem der vorgestehenden Ansprüchen, **dadurch gekennzeichnet, dass** das Ventilgehäuse (4) zu dem Zitzenbechergehäuse (1) mitttels zweier O-Ringe (5, 5') verbunden ist.

7. Verwendung eines Zitzenbechers nach Anspruch 1 für das Melken von Kühen, **dadurch gekennzeichnet, dass** vier Zitzenbecher (1, 2, 3, 5, 6) in einem gemeinsamen Tragarm angebracht sind, mit dem Zitzengummi nach oben gerichtet während des Hintransportieren zu den Milchdrüsen.

## Revendications

1. Gobelet trayeur avec un boitier (4) de soupape sous un manchon trayeur (2) pour des trayeuses comprenant une connection (3) a une source de vacuum pulsé et une connection (6) pour le transfert de lait, **caractérisé en ce qu'**il comprend un levier soupape pivoté (8) monté dans le boitier de soupape (4) et fourni d'un corps de soupape (9) qui peut fermer sufissament la connection de vacuum, ainsi-qu'un diaphragme (11) qui est movible selon la différence de pression entre le boitier de soupape (4) et l'atmosphère environnant, ledit levier de soupape (8) étant causé par le diaphragme (11) d'ouvrir pendant traite ou lavage, et de fermer quand le diaphragme (11) est inactif, oû fermé a main par un poussoir (14).

2. Gobelet trayeur selon revendication 1, **caractérisé en ce que** le diaphragme (11) est placé dans le boitier (4) dans une façon telle qu'il peut être en plus active par un doigt pour forcer l'ouverture du levier soupape (8).

3. Gobelet trayeur selon revendication 1, **caractérisé en ce que** des moins (15, 16) sont prevues pour que poussant le bouton (14) au même temps ouvre pour l'entrée de l'air atmosphérique dans le boitier de soupape (4).

4. Gobelet trayeur selon revendication 1, **caractérisé en ce que** le boitier (4) est fournit d'une ouverture étallonée (13) pour l'entrée bien defini de l'air atmosphérique.

5. Gobelet trayeur selon revendication 1, **caractérisé en ce que** le le corps de soupape (9) est étanche contre la siège (7) de la soupape quand le levier (8) est activé, et **en ce qu'**il est établi une passage d'air (17) en conjonction du corps de soupape (9), qui peut être fermé par un autre corps de soupape (18) placé sur un autre bras (19) pivoté et avec un ressort.

6. Gobelet trayeur selon l'une quelconque des revendications précédents, **caractérisé en ce que** le boitier de soupape (4) est joint au boitier de gobelet trayeur (1) par deux anneaux toriques (5, 5').

7. Utilisation d'un gobelet trayer selon revendication 1 pour la traite des vaches, **caractérisé en ce que** quattre gobelets trayers (1, 2, 3, 5, 6) sont monté dans un bras porteur mutuel dans le position de traite avec le manchon trayeur orienté vers l'haut pendant le transport vers les glandes mammaires.
